# DEMANDE DE BREVET EUROPEEN

(11) **EP 1 156 347 A1**
(43) Date de publication de la demande: **21.11.2001**
(21) Numéro de dépôt: 01401051.6
(22) Date de dépôt: 25.04.2001
(51) Int. Cl.: G01T 1/24

(54) **Dispositif porte-détecteur pour la détection de rayonnements ionisants**

(30) Priorité: 27.04.2000 FR 0005390
(71) Demandeur: COMMISSARIAT A L'ENERGIE ATOMIQUE, 75752 Paris Cédex 15 (FR)
(72) Inventeur: Montemont, Guillaume, 38000 Grenoble (FR); Arques, Marc, 38100 Grenoble (FR); Verger, Loick, 38000 Grenoble (FR)
(74) Mandataire: Signore, Robert

(57) **Abrégé**

L'invention concerne un dispositif de détection de rayonnements ionisants comprenant :
- au moins un élément de détection en matériau semi-conducteur (6), ayant des faces supérieure et inférieure et une partie centrale et assurant la conversion des rayonnements ionisants en charges électriques ;
- une électrode supérieure (4) et une électrode inférieure (5) positionnées, respectivement, sur la face supérieure et la face inférieure de l'élément de détection, en regard l'une de l'autre ;
- un support (1) dans lequel est positionné l'élément de détection ; et
- des moyens électroniques (7) de polarisation des électrodes et de lecture des signaux délivrés par lesdites électrodes,
caractérisé en ce que le support comporte des parois (1a, 1b, 1d) en matériau conducteur formant au moins un compartiment ouvert, entourant l'élément de détection (6) sans contact électrique avec la partie centrale dudit élément de détection.

## Description

### Domaine de l'invention

L'invention concerne un porte-détecteur utilisable dans les dispositifs de détection de rayonnements ionisants de grandes dimensions. Ce porte-détecteur est destiné à permettre l'association de plusieurs détecteurs de rayonnements ionisants pour former une barrette de détection ou une matrice de détection.

L'invention trouve des applications dans le domaine de la mesure et de l'imagerie de rayonnements ionisants tels que les rayonnements gamma. En particulier, elle trouve des applications dans le domaine de l'imagerie gamma, pour permettre la réalisation d'imageurs 2D de grandes dimensions.

### Etat de la technique

Actuellement, les imageurs de rayonnements ionisants, tels que les rayonnements gamma, sont réalisés en utilisant des détecteurs en matériau semi-conducteur, tel que le CdZnTe ou bien le CdTe, le HgI₂, le Ge, le Si, etc. Avec de tels détecteurs semi-conducteurs, lorsqu'un photon, par exemple un photon gamma, arrive sur le détecteur, il crée des paires d'électrons et de trous, en nombre proportionnel à son énergie. Ces électrons sont alors collectés par des paires d'électrodes (anode/cathode) placées l'une sur la face supérieure et l'autre sur la face inférieure du détecteur, ces électrodes créant un champ électrique dans le détecteur. Un signal électrique, proportionnel à l'énergie déposée par le photon dans le détecteur, est émis par le détecteur et lu par un circuit électronique de lecture.

Cependant, ces détecteurs semi-conducteurs sont de petite taille et, par conséquent, il est nécessaire d'assembler plusieurs de ces détecteurs pour réaliser un imageur, et en particulier un imageur de grande dimension. Pour cela, les détecteurs semi-conducteurs doivent être assemblés sous forme d'une matrice.

Pour permettre l'assemblage de détecteurs semi-conducteurs en une matrice 2D, le brevet US-A-5 905 264 propose de juxtaposer des modules de plusieurs pixels réalisés sur un seul détecteur monolithique. Autrement dit, un monobloc de matériau détecteur, appelé élément de détection, supporte plusieurs paires d'électrodes juxtaposées les unes aux autres, chaque paire d'électrodes (anode/cathode) constituant un pixel, la cathode pouvant être commune à plusieurs pixels. Cependant, il est difficile de trouver un matériau qui, pour un volume suffisamment important pour contenir n pixels, présente de bonnes qualités de transfert des charges.

Par ailleurs, le document "A basic component for ISGRI, the CdTe gamma camera on board the INTEGRAL satellite", ARQUES et al., IEEE Transactions on Nuclear Sciences 46(3) : 181 - 186, 1999, propose un dispositif réalisé à partir de plusieurs modules juxtaposés contenant chacun un détecteur, chaque détecteur formant un pixel. Un tel dispositif présente l'avantage d'offrir un rendement élevé, car il est relativement aisé de réaliser des détecteurs de petite taille, de bonne qualité. De plus, dans ce cas, le traitement technologique de chaque pixel est relativement simple. Cependant, l'assemblage de ces détecteurs sur une même plate-forme est complexe, car il demande un positionnement mécanique précis. De plus, un tel dispositif présente l'inconvénient que la proximité entre les pixels génère une certaine diaphonie électromagnétique : le déplacement des charges causé par une interaction ou le bruit dans un détecteur est transmis capacitivement aux détecteurs adjacents.

Les imageurs de rayonnements ionisants actuels présentent, en outre, un inconvénient dans le sens où les propriétés de transport des matériaux utilisés (comme le CdZnTe) sont modestes et, en particulier, en ce qui concerne les trous.

Pour compenser cette médiocre qualité du transport des trous, il est proposé de créer des effets d'écran. Le document "Electrode configuration and energy resolution in gamma-ray detectors" de LUKE, Nucl. Inst. Meth., A380 : 232 - 237, 1996, ainsi que le document "Performance of CdZnTe geometrically weighted semi-conductor Frisch grid radiation detectors", Mc GREGOR and ROJESKI, IEEE Nuclear Science Symposium, Nov. 8 - 14, 1998, et la demande de brevet WO-99 03155 proposent des dispositifs permettant de modifier l'induction du signal électrique. Autrement dit, dans ces dispositifs, le déplacement des trous est écranté électromagnétiquement afin de ne mesurer que le transport des électrons. Cependant, ces dispositifs sont complexes et difficiles à mettre en oeuvre.

En particulier, la demande de brevet WO-99 03155 propose un détecteur comportant une électrode en anneau positionnée autour de l'élément de détection et constituant une grille de Frisch, sans contact avec l'élément de détection et séparée de lui par une épaisseur d'air ou d'un autre isolant.

Cependant, ces dispositifs présentent l'inconvénient majeur de nécessiter une mise en oeuvre complexe, en particulier la réalisation des anneaux autour des éléments détecteurs. De plus, ces procédés de dépôt ne s'adaptent pas à un traitement collectif de plusieurs détecteurs et donc une application industrielle ne peut guère être envisagée.

### Exposé de l'invention

L'invention a justement pour but de remédier aux inconvénients des dispositifs décrits précédemment. A cette fin, elle propose un dispositif de détection de rayonnements ionisants comportant un porte-détecteur ou support compartimenté qui assure un positionnement correct et aisé du détecteur tout en réalisant un écran de blindage entre les différents détecteurs pour éviter les problèmes de diaphonie électromagnétique, et en permettant une bonne collection des charges électroniques déposées par le rayonnement incident.

De façon plus précise, l'invention concerne un dispositif de détection de rayonnements ionisants comprenant :
- au moins un élément de détection en matériau semi-conducteur, ayant des faces supérieure et inférieure et une partie centrale, et assurant la conversion des rayonnements ionisants en charges électriques ;
- une électrode supérieure et une électrode inférieure positionnées, respectivement, sur la face supérieure et la face inférieure de l'élément de détection, en regard l'une de l'autre ;
- un support dans lequel est positionné l'élément de détection ; et
- des moyens électroniques de polarisation des électrodes et de lecture des signaux délivrés par lesdites électrodes,
caractérisé en ce que le support comporte des parois en matériau conducteur formant au moins un compartiment ouvert, entourant l'élément de détection sans contact électrique avec la partie centrale dudit élément de détection.

Selon un mode de réalisation de l'invention, le support a une forme de U.

Avantageusement, les parois du compartiment sont séparées de la partie centrale de l'élément de détection par un matériau isolant.

Chaque compartiment réalisant le support peut entourer plusieurs éléments de détection.

De façon avantageuse, le support comporte plusieurs compartiments positionnés les uns à côté des autres.

Les parois du support peuvent être portées à un potentiel fixe.

### Brève description des figures

- Les figures 1A et 1B représentent schématiquement un mode de réalisation du dispositif porte-détecteur de l'invention ;
- les figures 2A et 2B représentent un autre mode de réalisation du dispositif de l'invention ; et
- la figure 3 représente le dispositif de l'invention, lorsqu'il est associé à d'autres dispositifs identiques.

### Description détaillée de modes de réalisation de l'invention

L'invention concerne un dispositif porte-détecteur destiné à être utilisé dans des détecteurs de rayonnements ionisants, tels que les rayons gamma. Ce porte-détecteur consiste en un support, appelé porte-détecteur, présentant des parois réalisées dans un matériau conducteur ou dans un matériau isolant recouvert d'une couche conductrice, et entourant le matériau de détection semi-conducteur, appelé "élément de détection", sans toutefois avoir de contact électrique avec cet élément.

Ce dispositif peut être réalisé selon deux modes de réalisation.

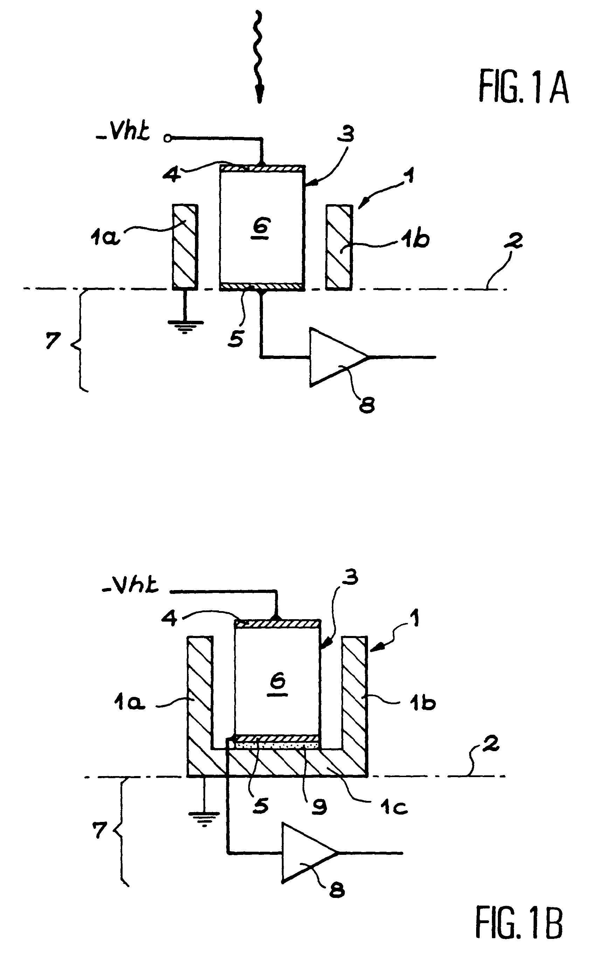

Le premier mode de réalisation est représenté sur les figures 1A et 1B.

La figure 1A montre le détecteur 3, positionné sur une plate-forme 2 et entouré du porte-détecteur 1. Plus précisément, le détecteur 3 comporte un élément de détection 6, réalisé en matériau semi-conducteur et ayant une forme parallélépipédique.

Cet élément de détection 6 comporte sur sa face supérieure une électrode 4 et sur sa face inférieure une électrode 5, en regard l'une de l'autre.

L'ensemble de ce détecteur 3 repose sur une plate-forme 2 qui constitue le support du circuit électronique de polarisation et de lecture, référencé 7. Cette plate-forme 2 peut être, par exemple, un circuit imprimé ou bien une plaque d'alumine, etc..

Le circuit électronique 7 a pour rôle, d'une part, de polariser les électrodes du dispositif et, d'autre part, de lire les signaux électriques émis par les électrodes. Ce circuit électronique 7 sera décrit plus précisément par la suite.

Le détecteur 3 est entouré par un porte-détecteur 1. Dans le mode de réalisation de la figure 1A, le porte-détecteur 1 comporte des parois 1a et 1b, agencées de façon à former un compartiment ouvert. Ce compartiment est réalisé en matériau conducteur et a une surface plus grande que celle du détecteur 3. Celui-ci est positionné au centre du compartiment, d'une part, de façon à ce que les parois 1a et 1b dudit compartiment ne puissent être, en aucun cas, en contact électrique avec la partie centrale de l'élément de détection 6, c'est-à-dire avec la partie semi-conductrice, non recouverte d'électrode, de l'élément de détection et, d'autre part, de façon à ce que la hauteur du détecteur en vis-à-vis de ces parois s'étende à partir d'une des électrodes.

Le porte-détecteur peut être réalisé, par exemple, en aluminium ou bien en carbone ou dans tout autre matériau conducteur usinable ou moulable ou encore en un matériau isolant recouvert d'un matériau conducteur.

Plus précisément, les parois du porte-détecteur 1 sont isolées de la partie centrale de l'élément de détection 6, soit par de l'air, soit par un matériau isolant encapsulant ladite partie centrale.

Ces parois créent un écran de blindage entre deux détecteurs, évitant ainsi les problèmes de diaphonie électromagnétique entre les détecteurs.

Le rôle des électrodes 4 et 5 est de créer un champ électrique dans l'élément de détection. Pour cela, les électrodes sont polarisées : l'électrode 4, c'est-à-dire l'électrode supérieure, positionnée sur la face supérieure de l'élément de détection 6, est portée à une haute tension négative -Vht, et l'électrode inférieure 5, c'est-à-dire l'électrode placée sous la face inférieure de l'élément de détection 6, est connectée à l'entrée du circuit de lecture 8.

Ainsi, lorsqu'un rayonnement incident, tel qu'un rayon gamma (représenté par une flèche en zig-zag, sur la figure 1), arrive sur le détecteur 3, ce rayonnement est transformé en charges électriques par le matériau semi-conducteur. Ces charges sont collectées par les électrodes, ce qui crée un signal électrique qui est lu par le circuit électronique de lecture 8.

Selon le mode de réalisation représenté sur la figure 1A, le circuit de lecture 8 est un préamplificateur.

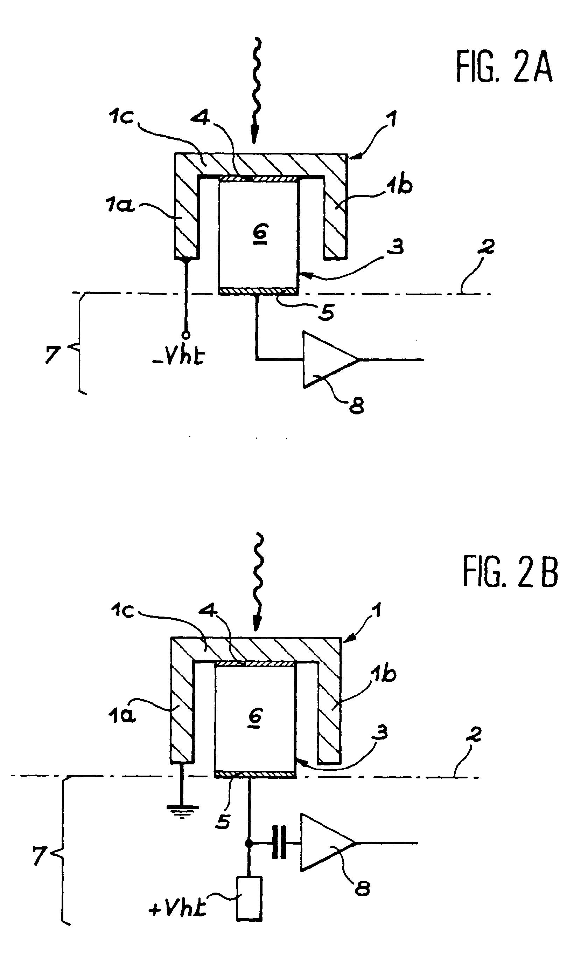

La figure 1B montre le dispositif porte-détecteur de la figure 1A, dans le cas où les parois 1a et 1b sont reliées mécaniquement pour constituer un U. Le montage électrique peut être identique à celui de la figure 1A mais nécessite alors une isolation 9 entre l'électrode 5 et la base 1c du support 1. Dans ce cas, il est intéressant d'inverser le rôle des électrodes 4 et 5 et de retrouver alors le câblage qui va être décrit en référence à la figure 2A.

Sur les figures 2A et 2B, on a représenté le dispositif de l'invention, selon un second mode de réalisation.

Sur ces figures 2A et 2B, les références identiques aux références de la figure 1 représentent des éléments identiques.

Dans ce mode de réalisation, le porte-détecteur 1 a la forme d'un U dont les jambes sont les parois 1a et 1b du porte-détecteur. Ce porte-détecteur en U est placé, comme un capot, au-dessus du détecteur 3, la base du U (référencée 1c) reposant directement sur l'électrode 4.

Les parois 1a et 1b sont de même longueur, celle-ci étant inférieure ou égale à la hauteur totale du détecteur 3. Toutefois, la distance entre les parois et la plate-forme peut être quelconque ; il n'y a aucune limite fonctionnelle.

Dans ce mode de réalisation, les électrodes 4 et 5 peuvent être polarisées de deux façons différentes :
- soit l'électrode 4 est portée à une haute tension négative (cas de la figure 2A), par exemple, par l'intermédiaire du porte-détecteur 1 alimenté en une haute tension négative -Vht, et l'électrode 5 est reliée au circuit électronique 8 ;
- soit l'électrode 5 est portée à une haute tension positive et l'électrode 4 est portée à la masse (cas de la figure 2B) ; dans ce cas, la haute tension positive est amenée par le circuit électronique 7 sur l'électrode inférieure 5, tandis que le porte-détecteur 1 est connecté à la masse, amenant ainsi la masse à l'électrode 4.

Dans le mode de réalisation de ces figures 2A et 2B, la base 1c du porte-détecteur peut être affinée, ou bien percée de trous, de façon à faciliter la transmission du rayonnement incident.

Quelque soit le mode de réalisation de l'invention, chaque compartiment peut entourer plusieurs détecteurs, c'est-à-dire plusieurs éléments de détection associés chacun à une électrode supérieure et à une électrode inférieure. Ainsi, plusieurs pixels peuvent être réalisés dans un seul dispositif de l'invention.

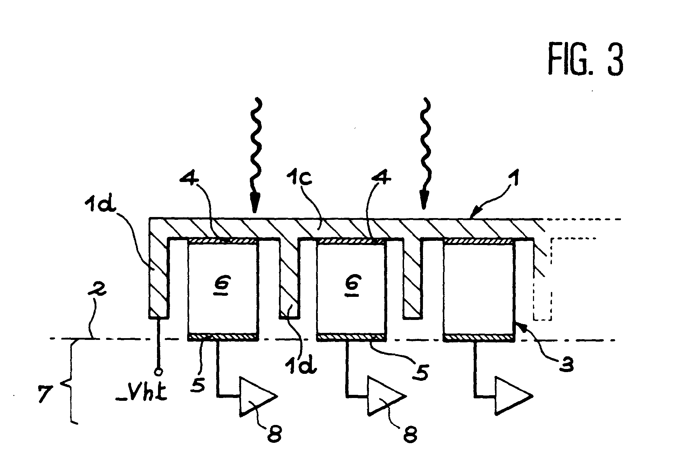

Sur la figure 3, on a représenté une application du dispositif de l'invention, selon son mode de réalisation des figures 2A et 2B. Dans cette application, plusieurs dispositifs de l'invention, identiques, sont associés les uns aux autres pour former une barrette de détection (s'ils sont associés selon une seule dimension), ou un imageur (s'ils sont associés selon deux dimensions).

Dans cette application, on a référencé 1 le porte-détecteur, qui, dans ce cas, comporte plusieurs compartiments séparés par des parois 1d.

Ces parois 1d sont identiques et ont les mêmes caractéristiques que les parois la et 1b des modes de réalisation décrits précédemment.

Dans ce mode de réalisation, chaque détecteur 3 est identique au détecteur 3 des figures 2A et 2B et chaque électrode inférieure 5 est connectée à un préamplificateur de lecture 8 qui, associé aux autres préamplificateurs de lecture 8, forme le circuit de lecture.

Un tel dispositif est donc apte à recevoir plusieurs rayonnements simultanément et à transformer ces rayonnements en plusieurs signaux électriques détectés par le circuit de lecture 7.

On comprendra également que le dispositif de détection correspondant au mode de réalisation des figures 1A et 1B peut également être associé à d'autres dispositifs identiques afin de former une matrice de détecteurs, de façon identique à ce qui est montré sur la figure 3.

## Revendications

1. Dispositif de détection de rayonnements ionisants comprenant :
- au moins un élément de détection en matériau semi-conducteur (6), ayant des faces supérieure et inférieure et une partie centrale et assurant la conversion des rayonnements ionisants en charges électriques ;
- une électrode supérieure (4) et une électrode inférieure (5) positionnées, respectivement, sur la face supérieure et la face inférieure de l'élément de détection, en regard l'une de l'autre ;
- un support (1) dans lequel est positionné l'élément de détection ; et
- des moyens électroniques (7) de polarisation des électrodes et de lecture des signaux délivrés par lesdites électrodes,
**caractérisé en ce que** le support comporte des parois (la, 1b, 1d) en matériau conducteur formant au moins un compartiment ouvert, entourant l'élément de détection (6) sans contact électrique avec la partie centrale dudit élément de détection.

2. Dispositif selon la revendication 1, **caractérisé en ce que** le support a une forme de U.

3. Dispositif selon l'une quelconque des revendications 1 et 2, **caractérisé en ce que** les parois du compartiment sont séparées de la partie centrale de l'élément de détection par un matériau isolant.

4. Dispositif selon l'une quelconque des revendications 1 à 3, **caractérisé en ce que** le compartiment entoure plusieurs éléments de détection.

5. Dispositif selon l'une quelconque des revendication 1 à 4, **caractérisé en ce que** le support comporte plusieurs compartiments positionnés les uns à côté des autres.

6. Dispositif selon l'une quelconque des revendications 1 à 5, **caractérisé en ce que** les parois du support (1) sont portées à un potentiel fixe.
